(19) Europäisches Patentamt
European Patent Office
Office européen des brevets

(11) **EP 3 496 331 A1**

(12) **EUROPEAN PATENT APPLICATION**

(43) Date of publication:
**12.06.2019 Bulletin 2019/24**

(51) Int Cl.:
*H04L 9/32* (2006.01)    *H04L 9/08* (2006.01)

(21) Application number: **17206295.2**

(22) Date of filing: **08.12.2017**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD TN**<br><br>(71) Applicant: **Koninklijke Philips N.V.**<br>**5656 AE Eindhoven (NL)**<br><br>(72) Inventors:<br>• **de Hoogh, Sebastiaan Jacobus Antonius**<br>**5656 AE Eindhoven (NL)** | • **Gorissen, Paulus Mathias Hubertus Mechtildis Antonius**<br>**5656 AE Eindhoven (NL)**<br>• **Schepers, Hendrik Jan Jozef Hubertus**<br>**5656 AE Eindhoven (NL)**<br><br>(74) Representative: **de Haan, Poul Erik et al**<br>**Philips International B.V.**<br>**Philips Intellectual Property & Standards**<br>**High Tech Campus 5**<br>**5656 AE Eindhoven (NL)** |

(54) **TWO-PARTY SIGNATURE DEVICE AND METHOD**

(57)    Some embodiments are directed to a client device (100) and a server device arranged for a two-party signature computation. The client device is arranged to compute a first partial signature ($X_c$) over the message ($M$) with a first two-party signature algorithm using a client share (112, $u_c$) of the client private key ($d_c$). The server device is configured to compute a first two-party signature ($S_c(M)$) obtained from the first partial signature ($X_c$) and the server share (212, $v_c$) of the client private key ($d_c$).

*Fig. 1*

**Description**

FIELD OF THE INVENTION

The invention relates to a client device, a server device, a client method, a server method, and a computer readable medium.

BACKGROUND OF THE INVENTION

Sensitive cryptographic operations, such as digitally signing a contract with your identity, are vulnerable against many cryptographic attacks. One of the known mechanisms to secure such operations is to split them between a client and a server. Typically, the underlying system involves secret sharing of the private key between the client and the server. The individual shares may be randomized so as to contain no information about the secret key. To obtain a signature the client and server engage in a protocol where they use their shares as input. The protocol is such that neither Client nor Server learn any information about the secret key. References [1] and [3] give several examples of two-party signature algorithms based on different cryptographic primitives. For example, reference [1] gives both multiplicative and additive ways to split an RSA key into multiple shares. For example, according to one option, disclosed in [1], an RSA decryption exponent $d$ is split as $d_c d_s = d\ mod\ \varphi(N)$. The client sends $x_c = H(M)^{d_c}\ mod\ N$ to the server. The server computes a signature $x = x_c^{d_s}\ mod\ N$, and returns it to the client.

Even if such a signature algorithm were fully secure, then still the key generation would be vulnerable as a single point of failure. There are interactive solutions known in the art which allow a secure key generation between a client and a server based on multi-party computation, see references [5, 4, 6], but these are quite impractical in terms of runtime.

**References**

The references below are included herein by reference:

[1] Mihir Bellare and Ravi Sandhu.: The Security of Practical Two-Party RSA Signature Schemes. In Cryptology ePrint Archive, Report 2001/060. 2001 http://eprint.iacr.org/2001/060

[2] RFC3447, Section 8.2.1: RSASSA-PKCS1-v1.5

[3] Philip MacKenzie and Michael K. Reiter: Two-Party Generation of DSA Signatures(Extended Abstract). Bell Labs, Lucent Technologies, Murray Hill, NJ, USA

[4] C. Hazay, G. L. Mikkelsen, T. Rabin, and T. Toft.:Efficient RSA Key Generation and Threshold Paillier in the Two-Party Setting In Cryptology ePrint Archive, Report 2011/494, 2011

[5] N. Gilboa.: Two party RSA key generation. Annual International Cryptology Conference. Springer, Berlin, Heidelberg, 1999

[6] Angelo Agatino Nicolosi.: Efficient RSA Key Generation Protocol in a Two-Party Setting and its Application into the Secure Multiparty Computation Environment. Diss. Aarhus University, Department of Computer Science, 2011.

SUMMARY OF THE INVENTION

A client device and server device are provided as defined in the claims which are arranged for a two-party signature computation. A public/private key is generated for each of the client device and server device, but the private keys are shared across the two devices. For example, the client device has a client share of the client private key and a client share of a server private key. This system uses keys that can be generated across two devices. Not only is a signature scheme obtained which may be effectively secured during signature generation, e.g., against memory scraping attacks, but that also may be secure during key generation. Two-party signatures may be provided that are efficient, secure and which have a key generation phase which is also secured against memory scraping.

Although the known split signature schemes prevent attackers from obtaining information about the private key during signature provisioning, their key splitting phase remains vulnerable. Known solutions to secure key generation are too expensive in terms of runtime. An efficient solution could be splitting the key off-line on a highly secure server, but this is generally not accepted as users want to provide their own input, e.g., using a random generator of their own choice and under their own control.

Furthermore, it is desirable that a two-party key signature scheme remains compatible with existing signature infrastructure. For example, it is desirable that a signature which was created using a secured two-party signature scheme can still be verified using existing signature verification methods.

Signature generation according to an embodiment provides a signature scheme that is secure both during signing but also during key generation. Moreover, the created signature can be compatible with existing signature verification applications. Furthermore, key generation is not done solely at a trusted third party, a user has genuine input in the key generation. The other party cannot sign without cooperation from the user.

In an embodiment, a client computes two partial signatures ($X_s$) over the message. This may be done directly over the message ($M$), a hash of the message ($H(M)$), or a padded hash of the message ($PAD(H(M))$). The server device is configured to complete the partial signature into a complete signature. The user cannot do this himself, since he has never seen the full server private key. In other words, a valid signature must have been seen by the server device. This gives increased assurance to the signature. The signature has increase non-repudiation properties since a key scrapping attack at the client device could not have given the full key to an attacker. Moreover, participation of the server allows the server to enforce verifications. For example, the server may verify the partial signatures, so that a valid full signature proves that at least the server device was convinced that the client device has the user shares.

Note that embodiments of the invention allow the client device to use any desired type of padding. In particular, an embodiment can be fully compatible with EMSA-PSS-ENCODE padding, e.g., as defined in RFC 8017.

An aspect of the invention is a client method and a server method. An aspect of the invention is a computer readable medium comprising transitory or non-transitory data representing instructions to cause a processor system to perform the method according to an embodiment of the invention.

The client device, and server device are electronic devices. They may be mobile electronic devices, in particular the client device. The devices may be integrated. Such a device has the ability to create signatures (as a client device), and to participate in generating signatures for others. The client device may be a mobile phone, set-top box, smart-card, computer, and the like. For example, one may configure a mobile phone as the client device and a computer of the user, e.g., a desktop computer, as the server device. In this case, the mobile phone can sign messages with help of the desktop computer. The server device may also be a trusted third party which is configured to participate in a signing operation for multiple client devices.

One could configure the mobile phone and computer each as a client and a server device, so that each can sign for the other. In principle, this could reuse the same keys, the client shares taking the place of server shares and vice versa depending on whether the device is acting as signer, e.g., as client device, or as assistant signer, e.g., as server device. For increased security, the two devices use different keys depending on their roles, e.g., as client or as server respectively.

The method of signature generation and verification described herein may be applied in a wide range of practical applications. Such practical applications include communication systems, e.g., to protect integrity and authenticity of messages, financial systems, e.g., to protect financial transactions, storage systems, e.g., to protect the data in storage, etc.

A method according to the invention may be implemented on a computer as a computer implemented method, or in dedicated hardware, or in a combination of both. Executable code for a method according to the invention may be stored on a computer program product. Examples of computer program products include memory devices, optical storage devices, integrated circuits, servers, online software, etc. Preferably, the computer program product comprises non-transitory program code stored on a computer readable medium for performing a method according to the invention when said program product is executed on a computer.

In a preferred embodiment, the computer program comprises computer program code adapted to perform all the steps of a method according to the invention when the computer program is run on a computer. Preferably, the computer program is embodied on a computer readable medium.

Another aspect of the invention provides a method of making the computer program available for downloading. This aspect is used when the computer program is uploaded into, e.g., Apple's App Store, Google's Play Store, or Microsoft's Windows Store, and when the computer program is available for downloading from such a store.

BRIEF DESCRIPTION OF THE DRAWINGS

Further details, aspects, and embodiments of the invention will be described, by way of example only, with reference to the drawings. Elements in the figures are illustrated for simplicity and clarity and have not necessarily been drawn to scale. In the figures, elements which correspond to elements already described may have the same reference numerals. In the drawings,

Fig. 1 schematically shows an example of an embodiment of a client device,

Fig. 2 schematically shows an example of an embodiment of a server device,

Fig. 3 schematically shows an example of an embodiment of a key generation device,

Fig. 4 schematically shows an example of an embodiment of a client method and an example of an embodiment of a server method,

Fig. 5 schematically shows an example of an embodiment of a key generation method and a signature verification method,

Fig. 6a schematically shows a computer readable medium having a writable part comprising a computer program according to an embodiment,

Fig. 6b schematically shows a representation of a processor system according to an embodiment.

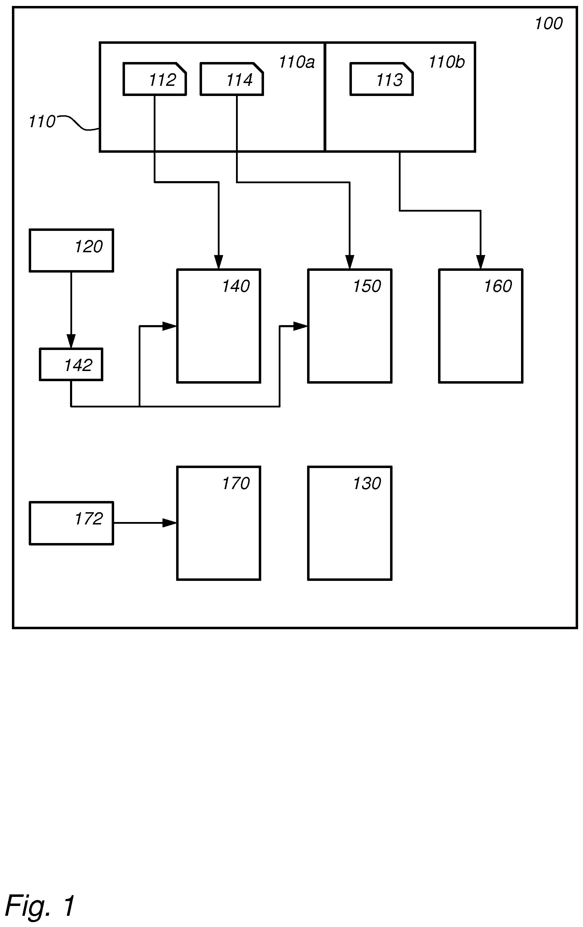

List of Reference Numerals, in figures 1-3:

| | |
|---|---|
| 100 | a client device |
| 110 | a key storage |
| 110a | a private key storage part |
| 110b | a public key storage part |
| 112 | a client share of a client private key |
| 113 | a public key |
| 114 | a client share of a server private key |
| 120 | a message storage |
| 130 | a communication interface |
| 140 | a first partial signature unit |
| 142 | a padding unit |
| 150 | a second partial signature unit |
| 160 | a signature verification unit |
| 170 | an authentication token creation unit |
| 172 | a context storage |

| | |
|---|---|
| 200 | a server device |
| 210 | a key storage |
| 210a | a private key storage part |
| 210b | a public key storage part |
| 212 | a server share of a client private key |
| 214 | a server share of a server private key |
| 216 | combination weights |
| 230 | a communication interface |
| 240 | a first finalizing signature unit |
| 250 | a second finalizing signature unit |
| 255 | a combining unit |
| 260 | a verification unit |
| 270 | an authentication token verification unit |
| 272 | a context storage |

| | |
|---|---|
| 300 | a first key generation device |
| 310 | a key storage |
| 310a | a private key storage part |
| 310b | a public key storage part |
| 312 | a first share |
| 313 | a public key |
| 314 | a second share |
| 330 | a communication interface |
| 340 | a shared key generator |
| 350 | a key deletion unit |

DETAILED DESCRIPTION OF THE EMBODIMENTS

While this invention is susceptible of embodiment in many different forms, there are shown in the drawings and will herein be described in detail one or more specific embodiments, with the understanding that the present disclosure is to be considered as exemplary of the principles of the invention and not intended to limit the invention to the specific embodiments shown and described.

In the following, for the sake of understanding, elements of embodiments are described in operation. However, it will be apparent that the respective elements are arranged to perform the functions being described as performed by them.

Further, the invention is not limited to the embodiments, and the invention lies in each and every novel feature or combination of features described herein or recited in mutually different dependent claims.

A client device and server device are provided which are arranged for a two-party signature computation. A public/private key is generated for each of the client device and server device, but the private keys are shared across the two devices. For example, the client device has a client share of the client private key and a client share of a server private key. The two-party signature according to the invention defined in claim 1 is obtained by combining two further two-party signatures: a first two-party signature algorithm and a second two-party signature algorithm.

These two-party signatures have a first half in which a first device, e.g., the client device, computes a partial signature, e.g., using a partial signing function which may use as input a private key share, and possibly common parameters such as a modulus $N$, or a generator $g$, etc. The partial signatures are sent to the second device, e.g., the server device, who computes full two-party signatures from the partial signatures and a further private key share, e.g., using a two-party signing function, e.g., a finalizing signing function. The finalizing signing function takes as input the partial signature and a further key share. Embodiments may thus use two-party signing algorithms comprising a partial signing function and a finalizing signing function. For example, the client device may use a first and second partial signing function according to a first and second two-party signature algorithm. The server device may use a first and second finalizing signing function according to the first and second two-party signature algorithms. The two signatures that are obtained in this way are valid signatures in their own right, however in an embodiment, the two (or more) two-party signatures are combined into a final signature.

This system uses keys that can be generated across two devices. Not only is a signature scheme obtained which may be effectively secured during signature generation, e.g., against memory scraping attacks, but that also may be secure during key generation. Two-party signatures may be provided that are efficient, secure and which have a key generation phase which is also secured against memory scraping. The two signature schemes may be based on exponentiation with a secret, e.g., private exponent. For example, they may be RSA based.

Although split signature schemes prevent attackers from obtaining information about the private key during signing, the key splitting phase remains vulnerable. Known solutions to secure key generation are too expensive in terms of runtime. An efficient solution could be splitting the key off-line on a highly secure server, but this is generally not accepted as users want to provide their own input, e.g., using a random generator of their own choice and under their own control. We show how double signatures can be applied to avoid impersonating the signer even when a memory scraper is active during key-generation on either the client's device or the server's.

To secure the key generation phase while catering for the user requirement to be able to provide their own input, we provide a shared signature scheme that may be based on double signing that has no single point of failure during key generation and which is efficient. A client can sign a document with the help of a signing server and, as such, avoid that his full secret key has to be stored on either his device or on the server. Instead, his credentials are shared between them.

Indeed, keys can be generated rather efficiently (in matter of milliseconds) on a single device, whereas a multi-party generation will take orders of minutes/hours [6]. So, if both the client and the server would generate keys, this will be very efficient. In embodiments, a signature depends on both generated key pairs, and the result is that device and server basically just execute a very efficient joint (split) generation of a signature key. Execution of either one or both signature schemes will be split between the parties, depending on how to shield the client authentication assets like PIN or password.

Unlike Diffie-Hellman and similar key agreement schemes, which prevent information leakage to attackers eavesdropping the exchanged messages, an advantage of this method is that the resulting effective key never appears physically on either client device or the server device, and hence can never be scraped.

Below an embodiment is described which uses a two-party signature scheme based on RSA, e.g., taken from [2] as a building block. In an embodiment, a client has to enter some secret data (like a password or PIN) to generate data that the server requires before accepting a signing request from the client. This improves security since otherwise a memory scraper on the client could impersonate the client to the server to forge signatures using the server. There are several known solutions for this and, therefore, not treated in further detail in this application.

For now, we suppose that there is a function $f$ on the device of the client that, based on the password or some other user data, computes a one-time authentication token (OTT). The function may also take as input further context data, e.g., data created and stored on the device. For example, the context data may comprise a current date, or current time, which may be rounded, say to the nearest hour. The context data may comprise a session counter. The session counter is increased every time a signature is created. The server keeps a like counter, and can thus verify that the function $f$ was computed correctly.

Below a possible embodiment is described which uses two two-party signatures.

### Key Generation

**Setup:** we have a client and a server who agree on a public exponent $e$. For example, the public exponent $e$ may be randomly generated, or it may be fixed in a standard, etc. The public exponent may be regarded as a fixed system parameter, e.g., fixed for all or many client devices. On the other hand, a different public exponent may be generated for each client device.

### Step 1: RSA key generation

The Server picks a random 2048-bit RSA modulus $N_s = p_s q_s$ and computes the corresponding secret exponent $d_s = e^{-1} \bmod \phi(N_s)$.

The Client picks a random 2048-bit RSA modulus $N_c = p_c q_c$ and computes the corresponding secret exponent $d_c = e^{-1} \bmod \phi(N_c)$.

### Step 2: Generating RSA key Shares

The Server picks a random exponent $v_s$ and computes $u_s = v_s^{-1} d_s \bmod \phi(N_s)$.

The Client picks a random exponent $v_c$ and computes $u_c = v_c^{-1} d_c \bmod \phi(N_c)$.

### Step 3: Sharing Secrets

The Server sends $v_s, N_s$ to the client, and deletes $d_s, v_s$, and keeps $u_s$ and $N_s$.

The Client sends $v_c, N_c$ to the server, and deletes $d_c, v_c$, and keeps $u_c$ and $N_c$.

### Signature Generation

**Setup:** we have a client and a server. The client wishes to sign a message $M$, e.g., a document. Client and Server have obtained integers $\alpha$ and $\beta$ such that $\alpha N_c + \beta N_s = 1 \bmod N$, where $N = N_c N_s$. Note that $\alpha$ and $\beta$ exist and can be found using Euclid's algorithm on input $N_c$ and $N_s$.

### Step 1: RSA signature part 1

The client enters his PIN to get OTT.

The client computes $EM$ =EMSA-PSS-ENCODE($M$, 2048) (see RFC 8017).

The client sends two independent partial signatures on M, being $X_c = (EM)^{u_c} \bmod N_c$ and $X_s = (EM)^{v_s} \bmod N_s$, and OTT to the server.

### Step 2: RSA signing part 2

The server verifies OTT.

The server computes signature $\delta_c(M) = (X_c)^{v_c} \bmod N_c$.

The server computes signature $\delta_s(M) = (X_s)^{u_s} \bmod N_s$.

The server computes signature $\delta(M) = \beta N_s \delta_c(M) + \alpha N_c \delta_s(M) \bmod N$.

The server verifies this standard signature by RSASSA-PSS-Verify as described in RFC 8017. If the final signature $\delta(M)$ does not verify, it is discarded.

### Signature Verification

Interestingly, the final signature can be verified as a standard RSA signature, e.g., according to RFC 8017. Any third party can verify the signature on *M* using *e* and *N* using RSASSA-PSS-Verify as described in RFC 8017. This can be proven mathematically as follows:

$$(S(M))^e \bmod N$$

$$= (\beta N_s S_c(M) + \alpha N_c S_s(M))^e \bmod N$$

$$= \sum_{i=0}^{e} \binom{e}{i} (\beta N_s S_c(M))^i (\alpha N_c S_s(M))^{e-i} \bmod N$$

$$\equiv (\beta N_s S_c(M))^e + (\alpha N_c S_s(M))^e$$
$$+ \sum_{i=1}^{e-1} \binom{e}{i} (\beta N_s S_c(M))^i (\alpha N_c S_s(M))^{e-i} \bmod N$$

$$\equiv (\beta N_s S_c(M))^e + (\alpha N_c S_s(M))^e$$
$$+ \sum_{i=0}^{e-2} \binom{e}{i+1} (\beta N_s S_c(M))^{i+1} (\alpha N_c S_s(M))^{e-2-i+1} \bmod N$$

$$\equiv (\beta N_s S_c(M))^e + (\alpha N_c S_s(M))^e$$
$$+ \alpha\beta N S_c(M) S_s(M) \sum_{i=0}^{e-2} \binom{e}{i+1} (\beta N_s S_c(M))^i (\alpha N_c S_s(M))^{e-2-i} \bmod N$$

$$= (\beta N_s)^e (S_c(M))^e + (\alpha N_c)^e (S_s(M))^e \bmod N$$

$$= (\beta N_s)^e (EM + \delta N_c) + (\alpha N_c)^e (EM + \delta' N_s) \bmod N$$

$$\equiv EM(\beta N_s)^e + EM(\alpha N_c)^e \bmod N$$

$$= EM((\beta N_s)^e + (\alpha N_c)^e + 0) \bmod N$$

$$= EM \left( (\beta N_s)^e + (\alpha N_c)^e + \alpha\beta N \sum_{i=0}^{e-2} \binom{e}{i+1} (\beta N_s)^i (\alpha N_c)^{e-2-i} \right) \bmod N$$

$$= EM \left( \sum_{i=0}^{e} \binom{e}{i} (\beta N_s)^i (\alpha N_c)^{e-i} \right) \bmod N$$

$$\equiv EM(\beta N_s + \alpha N_c)^e \bmod N$$

$$= EM,$$

where *EM* is derived from the message, e.g., using EMSA-PSS-ENCODE from RFC 8017, and hence can be verified using EMSA-PSS-VERIFY(*M,EM,* 2048). Furthermore, this protocol is as secure as the original RSA is. Given an algorithm $\mathcal{A}$ that can forge signatures on *N*, where $N = N_1 N_2$ in time Q, then, to forge a signature under $N_c$, do the following

Generate a random $N_u$ calibrate $d_u = e^{-1} \bmod \varphi(N_u)$

Run $\mathcal{A}$ on input *M*, $e, N = N_c N_u$, determine $\alpha, \beta$ such that $\alpha N_c + \beta N_u = 1$. Receive: $\sigma = (EM)^d \bmod N$.

$\sigma = \alpha N_c \delta_u(M) + \beta N_u \delta_c(M) \bmod N$. Verify $\sigma$ on *M* to learn *EM*. Knowledge of *EM* makes that we can compute $EM^{d_u} \bmod N_u$

Furthermore, the next equation mod *N* holds:

$$N_u S_c(M) = (\sigma - \alpha N_c S(M))\beta^{-1} \bmod N$$

Substituting $\sigma$ gives:

$$N_u S_c(M) = (\beta N_u S(M))\beta^{-1} \bmod N$$

Notice, since $N = N_u N_c$ both sides of the equation are dividable by at least $N_u$, so there exits $\alpha'$, $\beta'$ such that

$$\alpha' N_u \mathcal{S}_c(M) + \beta' N_u N_c = N_u.$$

This gives:

$$\alpha' \mathcal{S}_c(M) + \beta' N_c = 1,$$

where a rewrite to $\delta_c(M)$ gives:

$$\mathcal{S}_c(M) = \frac{1 - \beta' N_c}{\alpha'}.$$

So this method is as secure as the original RSA is secure.

Further embodiments, including embodiment compatible with the above, are described below.

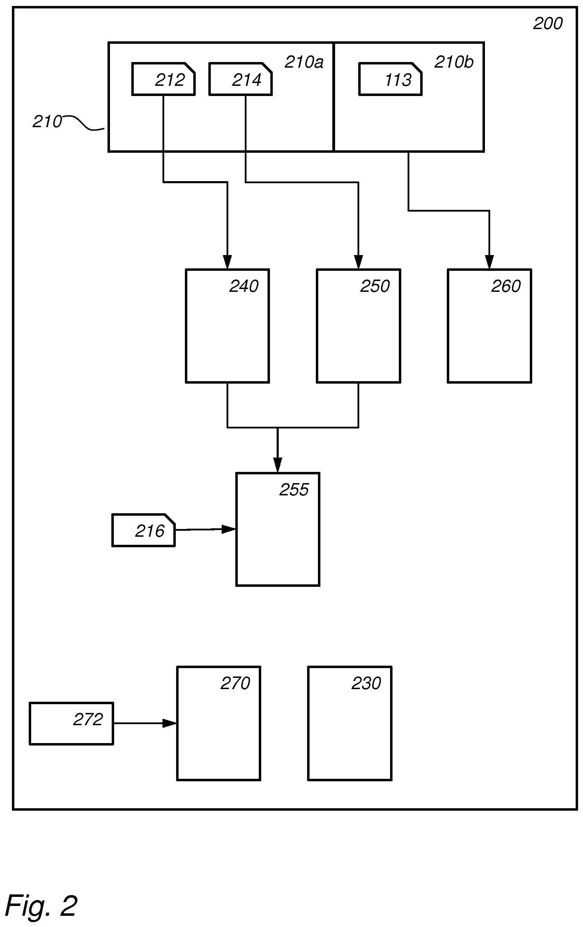

Fig. 1 schematically shows an example of an embodiment of a client device 100. Fig. 2 schematically shows an example of an embodiment of a server device 200.

Client device 100 and server device 200 may be electronic devices configured as embodiments of the invention. Client device 100 comprises a communication interface 130 arranged to communicate with the server device, and server device 200 comprises a communication interface 230. These communication interfaces are arranged to communicate with each other in digital format, e.g., by exchanging digital messages, e.g., over a computer network. For example, the computer network may be an internet, intranet, WLAN, etc. The computer network may be the internet. For example, communication interface 130 and/or 230 may be a wired interface, e.g., an Ethernet port. For example, communication interface 130 and/or 230 may be a wireless interface, e.g., a Wi-Fi interface, e.g., comprising a Wi-Fi antenna.

Client device 100 and server device 200 cooperate so that the client device can generate signatures in a secure manner.

The client device comprises a key storage 110. The key storage has a private key storage part 110a and a public key storage part 110b. In an embodiment, the key storage may be a single memory, e.g., a flash memory using the same access protection. In an embodiment, the private part of a key storage uses secure memory, e.g., access to which requires elevated rights.

In an embodiment, the private part 110a comprises

- a client share 112 of a client private key according to a first two-party signature algorithm. As an illustrative example, we will assume the first two-party signature algorithm is an RSA two-party signature algorithm, in particular the multiplicative algorithm disclosed in the background. However, other two-party signature algorithms can also be used. For example, a client private key $d_c$ may previously have been generated and shared into at least the client share 112, $u_c$ and a server share 212, $v_s$. The latter is stored at the server device, and

- a client share 114 of a server private key according to a second two-party signature algorithm. Like the first two-party signature algorithm, we will use the multiplicative two-party signature from [1], however other two-party signature algorithms may be used. For example, a server private key $d_s$ may have been shared into at least the client share 114, $v_s$ and a server share 214, $u_s$. The latter is stored at the server device.

The public part 110b may comprise the corresponding public keys, e.g., a public key 113. In an embodiment, the same public exponent $e$ is used for both the server private key and the client private key. The public key 113 is optional, as it is not needed for generation of a signature. However, it may be used to verify signatures, both final and intermediate, and therefore can add to security for some applications. For example, verifying the computations performed by the server prevents the client device from attacks in which the server is impersonated. Even if the public exponent is the same for the client private key and the server private key, the modulus for the client and server key may be different. The public moduli can be shared between the server and client device, e.g., as part of the private key shares. Sharing the server or client modulus outside the server and client is not needed to verify a signature. Although the sharing of this information will not directly impair the security, it may simplify factoring the public modulus $N = N_c N_s$, so for this reason it is preferred to keep the client and server moduli secret as well. In an embodiment, the public key 113, e.g., the public exponent and the public modulus $N$ are shared outside the server and client device, e.g., in the form of a certificate, e.g., an X.509 certificate.

The server device 200 comprises a key storage 210, also with a private part 210a and a public part 210b. The public part 210b is optional. In an embodiment, the public part 210b comprises at least the public key 113. This allows the server to verify that computations performed by the client device and sent to the server device are correct. This protects against some attacks, such as impersonation of the client device.

The private part 210a comprises the shares corresponding to the shares in private part 110a. For example, private part 210a may comprise

- a server share 212, e.g., $v_c$ of the client private key., e.g., $d_c$ according to the first two-party signature algorithm.
- a server share 214, e.g., $u_s$ of a server private key, e.g., $d_s$ according to a second two-party signature algorithm.

The key storages of the client and server devices also comprises the other information needed to perform the computations indicated below. For example, such information may include information such as a modulus, a generator, a generator order, and the like.

The client device and the server device may have been provisioned by a key generation device such as first key generation device 300. In an embodiment, the key generation of client and server device is analogous, so that any one of the client device and server device may be regarded as the first device for the purpose of key generation, and the other of the client and server device as the second device.

The public key of the client device is preferably unique for the client device. That is no other client device is provisioned with the same private key, or private key share. The public key, e.g., public exponent, may be the same for multiple devices. The server could use the same public/private key for all client devices. This reduces storage and distribution overhead. However, in an embodiment the server device uses a different server key for each client device. That is, the server private key are unique for each client device. For example, the key storage 210 may comprise a client share, server share and corresponding public keys for each client. For example, the key storage 210 may comprises a database, e.g., addressable by the client, e.g., a client identifier, for retrieving the correct client and server keys for that client device. An advantage of using a different server key for each client device, is that attacks which mix and match different parts of different protocol interactions are to a large extend avoided. In addition to the per-client server keys, the server may also have a server key of its own. This key is the same for all clients, and is used for other purposes, e.g., signing certificates, e.g., certificates comprising information needed to verify a client signature, e.g., the public exponent 113 and the public modulus $N$.

Client device 100 comprises message storage 120 arranged to store a message, e.g., $M$. The message may be composed on client device 100. For example, the message may comprise input of the user, e.g., a message which is to be sent to another user. The message may also be composed without user interaction. For example, the message may comprise automated information provided by or to client device 100. For example, the message may comprise sensor data obtained from a sensor of client device 100 (not separately shown in Fig. 1). Instead of the message, message store 120 may also or instead comprise a hash of the message. The hash may be received or computed by client device 100. The signature is preferably computed over the hash instead of directly over the message. For example, the hash may be taken from the SHA family, e.g., SHA-256.

In an embodiment, the client device only has a share of the client private key. This means that the client device is not capable to compute signatures on its own independent from the server device.

In practice, there is a tension between system designers and users, both want full control of the signing process. For example, a system designer may want to store keys and create signatures purely centrally. Server devices are less often compromised, and are more reliable than user devices. On the other hand, users do not always trust the servers, and want to be able to store and generate keys themselves. Moreover, compromise of a server gives significant damage to many users, so also from this point of view it may be sensible to involve a user device. To perform a full or final signature in this system, keys are needed that are stored at both devices, so a compromise of the system has less impact. For example, obtaining a key or key share at one device, e.g., through memory scraping, does not allow an attacker to generate a signature himself-he will also need the keys generated at the other device.

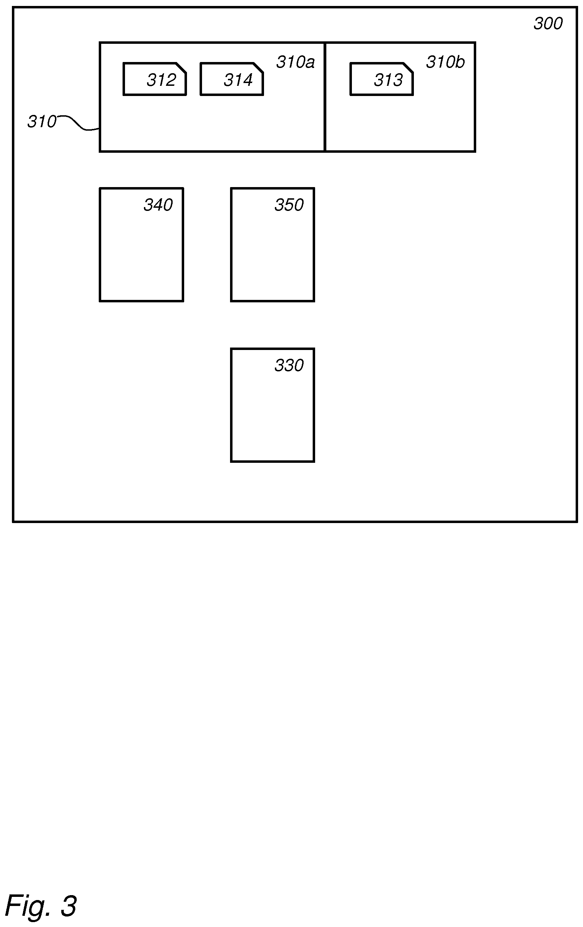

Client device 100 and server device 200 each comprise a processor circuit. They may also comprise a memory comprising computer process instructions. The processor circuit is arranged to execute the instructions stored in the memory. The execution of the signing is implemented in the processor circuit, examples of which are shown herein. The Figs. 1 and 2 show functional units that may be functional units of the processor circuit. For example, Figs. 1 and 2 may be used as a blueprint of a possible functional organization of the processor circuit. The processor circuit is not shown separate from the units in Figs. 1 and 2. For example, the functional units shown in Figs. 1 and 2 may be wholly or partially implemented in computer instructions that are stored at device 100 or 200, e.g., in an electronic memory of device 100 or 200, and are executable by a microprocessor of device 100 or 200. In hybrid embodiments, functional units are implemented partially in hardware, e.g., as coprocessors, e.g., crypto coprocessors, and partially in software stored and executed on device 100 or 200. The situation is the same for the device illustrated in Fig. 3. They may also comprise a processor circuit configured for the key generation and/or verification. They may also comprise a memory storing computer instructions arranged for the key generation and/or verification.

Client device 100 comprises a first partial signature unit 140. Client device 100 may use either his client share of the client private key for this, or the client share of the server private key. Later the first partial signature will be completed using the corresponding share of the same private which is stored at the server. In an embodiment, First partial signature unit 140 is arranged to compute a first partial signature, e.g., $X_c$ over the message, e.g., $M$. For example, the first partial signature may be computed over a hash of the message $M$ stored in storage 120, or over a padded hash. To compute the first partial signature, the first two-party signature algorithm is used, e.g., executed, e.g., a first partial signing function, which uses the client share 112, e.g., $u_c$ of the client private key, e.g., $d_c$.

Second partial signature unit 150 is arranged to compute a second partial signature, e.g., $X_s$ over the message, e.g., $M$. For example, the first partial signature may be computed over a hash of the message $M$ stored in storage 120, or over a padded hash. To compute the second partial signature, the second two-party signature algorithm is used, e.g., executed, e.g., a second partial signing function, which uses the client share 114, e.g., $v_s$ of the server private key $d_s$.

In an embodiment, the partial signing done by the client device for the first and/or second partial signature may comprise a padding operation. Client device 100 may comprise a padding unit 142. Padding unit 142 performs padding of the message hash before signing. Padding unit 142 may also perform hashing of the message. Padding is advantageous since it avoids attacks in which specially chosen messages are used to compromise the system. For example, it avoids attacks in which the multiplicative structure of the underlying signature primitive is exploited. For example, padding unit 142 may be an encoding unit as in PKCS#1.

The padding operation may be any desired type of padding, however, in an embodiment the same padding is used for the first and for the second partial signing. For example, a first and second partial signing operation may comprise the padding operation followed by an exponentiation operation. A hashing operation may precede the padding operation. The padding may be a non-deterministic padding, however, the same non-determinacy may be used for the first and second partial signature, so that the exponentiation is applied to the same data. Any desired form of padding may be used, e.g., EMSA-PSS-ENCODE according to RFC 8017 (see also, e.g., RFC 3447). Other types of padding may be used, as desired, e.g., optimal asymmetric encryption padding (OAEP), or EMSA-PKCS1-v1_5-ENCODE, etc.

The exponentiation in the first and second partial signature function may use a different exponent though. However, in an embodiment, the client private key, e.g., $d_c$, and to the sever private key, e.g., $d_s$, correspond to the same public key 113, e.g., $e$. The group or ring in which the exponentiation in which the first or second partial of final signature is performed may be different. For example, in case of RSA the exponentiation may be done modulo a composite first and second modulus, respectively.

The first and second partial signature, e.g., $X_c$ and $X_s$ are sent to server device 200, e.g., using communication interfaces 130 and 230. The communication may include additional information, such as an identifier of client device 100, so that the server device can select the appropriate client and server key to use. The message $M$ or message hash $H(M)$ may also be sent to allow the server device to verify the validity of the computation performed at the client device. The former also allows the server device to verify the correct execution of the hash operation. Moreover, this avoids attacks in which specially chosen message are offered for signing, since an attacker who needs to provide $M$ does not have control over the contents of $H(M)$. It is not necessary to send the message or message hash, while still having some verification of signatures. For example, the server may verify padding of the two-party signatures or the final two-party signatures, with the public exponent 113. In general, verifying a signature, whether the final signature or any of the two-party signature may be done by raising the signature to the power of the public exponent 113, e.g., modulo a modulus. The latter modulus may be the product of the first and second moduli used for the first and second two-party signatures. The result of the exponentiation may be verified in two ways: the padding may be verified and the link with the message may be verified. Verifying the padding ensures that correct keys were used, e.g., shares that correspond to each other and to the correct public key. However, when only padding is verified it is not checked that the signature corresponds to the intended message, e.g., $M$. With access to the message, or a hash thereof, etc, this correspondence may also be verified.

In an embodiment, the client does not contain the server share of his own client private key. This means, that even if a client were compromised, it cannot generate signatures without help from the server. Other information, that may lead to the private key may be removed from the client device as well, e.g., the individual primes in a modulus, the Euler function of the modulus, the private key itself, etc. The same may be done in an embodiment for the server; in an embodiment, the server does not contain the client share of his own server private key.

Server device 200 comprises a first finalizing signature unit 240, which is configured to compute a first two-party signature, e.g., $S_c(M)$. The server device 200 uses the first partial signature, e.g., $X_c$ and completes it to a full signature with the server share that corresponds to the share with which the first partial signature was created. For example, first finalizing signature unit 240 may be configured to compute a first two-party signature, e.g., $S_c(M)$ obtained from the first partial signature, e.g., $X_c$ and the server share 212, e.g., $v_c$ of the client private key, e.g., $d_c$.

Server device 200 comprises a second finalizing signature unit 250, which is configured to compute a second two-party signature, e.g., $S_s(M)$. The server device 200 uses the second partial signature, e.g., $X_s$ and completes it to a full signature with the server share that corresponds to the share with which the first partial signature was created. For example, second finalizing signature unit 250 may be configured to compute a second two-party signature, e.g., $S_s(M)$

obtained from the second partial signature, e.g., $X_S$, and the server share 214, e.g., $u_S$ of the server private key, e.g., $d_S$.

For example, the first and second finalizing signature units 240 and 250 may execute a finalizing signing function of the two-party signature algorithm which takes at least as input the partial signature and the server share of the client or server private key. For example, the units 240 and 250 may use a finalizing signature function corresponding to the partial signing function. In an embodiment, the finalizing, e.g., the finalizing signature function, comprises computing an exponent of the first or second partial party signature. The exponent is typically secret and correspond to public exponent 113, e.g., *e*. Units 240 and 250 use the same group or ring in which to compute as do units 140 and 150, e.g., in case of RSA the ring modulo a composite integer.

Client device 200 may comprise a combination unit 255 configured to combine the first and second two-party signatures, e.g., the outputs of units 240 and 250, e.g., to combine the first two-party signature, e.g., $S_c(M)$ and the second two-party signature, $S_s(M)$ into a final two-party signature, e.g., *S*. In an embodiment, the first and second two-party signatures are correct and verifiable signatures, created using private keys of the client and server. However, the final signature *S* has increased non-repudiation properties, since neither memory scrapping at the server nor at the client is sufficient to obtain the private keys needed to forge final signatures.

Combining the first and second two-party signatures may comprises computing a linear combination of the first and second two-party signatures. For example, the combining may be computed in a group or ring which is larger than the group of rings used for the partial and two-party signatures. For example, the first partial and two-party signature may be computed in a first group or ring. The second partial and two-party signature may be computed in a second group or ring. The combination may be done in larger group or ring, in which the first and second group or rings are subgroup or subrings. For example, in case of computing modulo a composite modulus, as in RSA, the larger group or ring may be obtained by computing modulo the product of the composite moduli. For example, elements modulo $N_c$ can be mapped to the larger ring by multiplying with $N_s$, etc.

For example, in an embodiment, the first partial signature, e.g., $X_c$, and the first two-party signature are computed modulo a client modulus, e.g., $N_c$, and the second partial signature $X_s$, and the second two-party signature are computed modulo a server modulus, e.g., $N_s$. The linear combination of the first and second two-party signatures can be computed by - multiplying the first two-party signature, e.g., $S_c(M)$, with a multiple of the server modulus, $\beta N_s$ and multiply the second two-party signature, e.g., $S_s(M)$, with a multiple of the client modulus $\alpha N_c$. For example, the server device may have integers $\alpha$ and $\beta$ such that $\alpha N_c + \beta N_s = 1 \bmod N$, where $N = N_c N_s$. Note that $\alpha$ and $\beta$ exist and can be found using Euclid's algorithm on input $N_c$ and $N_s$. The integers $\alpha$ and $\beta$ may also be chosen so that $\alpha N_c + \beta N_s = 1 + \lambda N$. The numbers $\alpha$ and $\beta$ or $\alpha N_c$ and $\beta N_s$ are called weighing parameters 216. They may be computed by the server device and stored, e.g., in the key storage 210. They may be computed anew each time they are needed.

In an embodiment, the client modulus, e.g., $N_c$, and the server modulus, e.g., $N_s$, may each be the product of two primes, which may be generated at the client and server respectively.

Sever device 200 may comprise a verification unit 260 configured to verify at least the padding of the final two-party signature (*S*) and/or of the first and second two-party signatures. For example, given an RSA based embodiment, the verification unit 260 may compute $S^e \bmod N$, instead or in addition, the verification unit 260 may compute or $S_c^e \bmod N_c$, or $S_s^e \bmod N_s$. $N_s$. If the server knows the message, or the hashed message, or the padded hashed message, then the server device can do a full verification of any one of these three signatures. For example, the information on the message may be received from the client device, e.g., together with the partial signatures. However, even if the message is not known, the server device can still do a usefull check, if a strong padding scheme is used. For example, if, say, EMSA-PSS-ENCODE is used, then the verification device 260 can verify if $S^e \bmod N$, $S_c^e \bmod N_c$, and/or $S_s^e \bmod N_s$ satisfy the padding. This does not prove that the signature corresponds to the correct message, although the client device can check this. It does show that the client and server shares correctly correspond to the same key. This helps to unmask attackers impersonating a client device. The server device may also receive the message, e.g., *M*, or its hash, e.g., *H(M)*, to verify the complete signature.

Verifying the first and/or second two-part signature has the advantage that the identity of the client device 100 is implicitly authenticated. If this signature is correct, then it follows that the client device must have had the client private key share. To avoid situations in which the hash of the message can be specially chosen, one may send the message from the client device to the server device. The latter has the disadvantage that the message is revealed to the server device. To avoid this other authentication means may be used, e.g., authentication tokens, see below. If the verification fails, the server device may abort the signing process, and/or take other appropriate action. Likewise, the server may authenticate to the client before signing proceeds, e.g., in a two-way authentication protocol.

Finally, the final signature may be sent from the server device to the client device. For example, in an embodiment, the server device may be configured to send the final two-party signature to the client device, and the client device may be configured to receive the final two-party signature from the server device. This is not necessary though, the server device may forward the signature to another party, e.g., a further device that need the signature, without going through the client device. For example, the server device may not forward the signature but store it at the server device, or at some further storage device of the server device. For example, the server device may comprise a file server. The client device uploads documents to the file server and signs the document according to an embodiment herein. The uploaded document and the computed two-party signature is then stored, e.g., stored together. In this case, the combined final signature need not leave the server device.

However, if the signature is returned to the client device, the client device may comprise a verification unit 160 for verifying the returned signature. For example, the verification unit 160 may compute, say, $S^e$.

The optional signature verification unit 160 comprised in client device 100 may protect against attacks in which an attacker modifies the communication with client device 100, e.g., they protect against a fake server device. If the signatures turn out to be correct, this proves the server device had access to the correct key shares. In an embodiment, signature verification unit 160 is configured to verify the final two-party signature, e.g., $S(M)$ using the public key 113, e.g., $e$.

In an embodiment, client device 100 comprises an optional authentication token creation unit 170 and optionally a context storage 172. Similarly, server device 200 may comprise an authentication token verification unit 270, a context storage 272.

For example, the authentication token creation unit 170 may be configured to generate an authentication token (OTT) and send the authentication token to the server device. The authentication token verification unit 270 may be configured to receive an authentication token from the client device, and to verify the authentication token. For example, the authentication token computation may be computed from one or more data. For example, a hash, an encryption, a key derivation, etc., may be performed over the data. The one or more data may comprise data received from the user, e.g., a password. The multiple data may also comprise context data, e.g., a date, or a counter. For example, the counter may count how many signatures were computed by server device 200. The context information may be stored in storage 172, and the same data may be stored in storage 272. The authentication token may be sent to server device 200 who can thus verify that the client device 100 is the correct device.

User input such as a password, such as a PIN code, which is not saved on the device will help against an attacker who can scrape only the stored (long-term) memory of the client's device. Such devices are sometimes referred to as lunch-time attacks. The memory scraping is done while the client is not active. Unfortunately, a password may not help against a stronger scraper that can also scrape all short-lived memory. Such a scraper would have to continuously active, though, also when the client is active. Such attacks are much harder to pull off; the scraper has to be active at just the right time, scraping just the right memory. Such an attack would be much harder than an attack against a stored secret, e.g., a secret stored in a context store, which is always present. In an embodiment, the user input and OTT are deleted, e.g., removed from the device, after the user input and OTT are used to authenticate to the server device, e.g., directly thereafter. A protected PIN can contribute to avoiding such attacks, e.g., by using a random keyboard or the like. This may help since in that case the PIN is not stored in a memory of the device.

For example, authentication token creation unit may comprise a smart card interface or a key-fob interface, e.g., may comprise a smart card reader, etc. The OTT may depend on information stored on the smart card or key-fob, etc.

Fig. 3 schematically shows an example of an embodiment of a (first) key generation device 300. The first key generation is arranged to cooperate with a second key generation device 300 which is otherwise similar and not separately shown in Fig. 3. Typically, the key generation device 300 will be integrated with client device 100 and server device 200, but this is not necessary. For example, key generation may be performed by a specialized device. For example, the computer code for key generation may be deleted after key generation has run. This avoids re-initialization attacks, in which a client is brought back to an initial state, to coax it to perform key generation again.

First key generation device 300 is arranged for generating a shared key with a second key generation device. The first key generation device comprises a communication interface 330 arranged for communicating with the second key generation device. Communication interface 330 may be implemented in the same manner as communication interfaces 130 and 230. Generation device 300 comprises a key storage 310 arranged for storing keys. Key storage 310 may be implemented in the same manner as key storages 110 and 210; likewise, key storage 310 comprises a public part 310b and private part 310a.

Generation device 300 comprises a shared key generator 340 configured to generate keys for a first two-party signature algorithm, said keys including a public key 313, e.g., $e$, a first share 312, e.g., $u_c$ a second share, e.g., $v_c$. The two shares are shares of the private key, e.g., $d_c$, that corresponds to the public key. The second share, e.g., $v_c$ of the first private key, e.g., $d_c$, is sent to the second device. The generating device receives for its part a second share 314, e.g., $v_s$ of a second private key, e.g., $d_s$ from the second device. The retained and the received shares: the first share 312 of the first private key and the second share 314 of a second private key are stored in the private part of the key storage. The corresponding public keys may also be exchanged, and stored in the public part. For example, the first device 300 may receive a second public key 315 from the second key generation device.

Generation device 300 may comprise key deletion unit 350. Key deletion unit 350 is configured to delete the first private key ($d_c$) and the second share ($v_c$) of the first private key ($d_c$) from device 300.

Generation of a public key and a private key in the form of two shares may be done by first generating the public key and private key, followed by splitting of the private key. The latter may be done by solving the equation $u_c v_c = d_c \mod \varphi(N)$. For example, one may repeatedly select a $u_c$, e.g., randomly, and attempt to solve the equation. If the latter fails, choosing the $u_c$ is repeated until a valid pair $u_c, v_c$ is found. The inventors found an elegant way to obtain a public key together with a split private key. For example, the new method may be employed in a device in which key generation is already available, but not key splitting hardware.

The generator 340 is configured to compute two temporary RSA public private key pairs (($a,b$)) and (($c,d$)) for the same modulus. The public key is then set to the public key of the first pair, the first key share to the product of the private key of the first pair and the public key of the second share, and the second share to the private key of the second pair. That is: $e = a$, $u_c = b_c$, $v_c = d$. In this manner, no equations need to be solved, and the construction can make direct use of existing key generation primitives.

In an embodiment, the first key generation device (or vice versa) sends the public key to the second key generation device. The second key generation device performs a key confirmation protocol on the public key to confirm that the first key generation device indeed has the corresponding private key or first private key share. For example, the two devices may perform the following protocol:

1. The client device generates a public key and split private key, e.g., a two-part key.
2. Client device sends the public key, server share of the client private key and a first challenge to the server device. Client may also send cryptographic parameters, such as a modulus.
3. Server device generates a two-part private key compatible with the parameters and using the same public key.
4. Server device computes a first partial signature with its own private key share on the first challenge.
5. Server device sends to the client device the first partial signature on the first challenge, the client share of its own server private key, and a second challenge.
6. Client device completes the first partial signature and verifies it with the public key. Client device computes a second partial signature over the second challenge and returns the second partial signature to the server.
7. Server device verifies the second partial signature using the public key.
8. If the verification is correct, then server device creates a certificate comprising the public key. The certificate may be signed with a further key, e.g., with a certificate signing private key, e.g., of the server. The certificate may be sent to the client device, or e.g., stored in a public repository.

The above protocol may be varied in a number of ways. For example, one may opt to have only one challenge. For example, only the server may send a challenge, not the client device. For example, the server device may generate the public key, instead of the client device. For example, the role of client and server may be interchanged, possibly with the exception of step 8. Step 8 may be omitted The messages that are exchanged may be suitably extended with a header, e.g., a transmission header, e.g., with an identification of the sending and/or receiving party etc. A challenge may be sent in the form of a seed, e.g., for applying a hash to the seed to obtain the challenge. The public key may be generated by the server device instead of the client device. The public key may also be jointly generated, e.g., by adding two shares of the public key, wherein the shares are generated by the client and server device respectively.

The final combined signature may be verified using existing signature verification devices.

Various embodiments of devices 100, 200, and 300 may comprise an input interface, which may be selected from various alternatives. For example, the input interface may be a network interface to a local or wide area network, e.g., the Internet, a storage interface to an internal or external data storage, a keyboard, an application interface (API), etc. Through the input interface request for signatures, messages, identities, and the like may be received.

Various embodiments of devices 100, 200, and 300 may have a user interface, which may include well-known elements such as one or more buttons, a keyboard, display, touch screen, etc. The user interface may be arranged for accommodating user interaction for performing, e.g., a signature generation, a key generation, a signature verification, etc.

Storages, such as storage 110, 120, 172, 210, 272, 310, may be implemented as an electronic memory, say a flash memory, or magnetic memory, say hard disk or the like. Storage 110 may comprise multiple discrete memories together making up the storage. A storage may also be implemented as a local storage or as an external storage, say cloud storage. In the latter case, the device comprises a reading and writing unit to read write in the external storage, say over a network connection. For example, part of a storage may be secure storage and the rest may be normal storage. A storage may also comprise temporary memory, say a RAM. In the case of a temporary storage, the storage contains some means to obtain data before use, say by obtaining them over an optional network connection and the like.

Typically, the devices 100, 200, and 300 each comprise a microprocessor (not separately shown) which executes appropriate software stored at devices 100, 200, and 300; for example, that software may have been downloaded and/or stored in a corresponding memory, e.g., a volatile memory such as RAM or a non-volatile memory such as Flash (not separately shown). Alternatively, the devices 100, 200, and 300 may, in whole or in part, be implemented in programmable logic, e.g., as field-programmable gate array (FPGA). Devices 100, 200, and 300 may be implemented, in whole or in part, as a so-called application-specific integrated circuit (ASIC), i.e. an integrated circuit (IC) customized for their particular use. For example, the circuits may be implemented in CMOS, e.g., using a hardware description language such as Verilog, VHDL etc.

In an embodiment, devices 100, 200, and 300 comprise one or more circuits. The circuits implement the corresponding units described herein. The circuits may be a processor circuit and storage circuit, the processor circuit executing instructions represented electronically in the storage circuits.

A processor circuit may be implemented in a distributed fashion, e.g., as multiple sub-processor circuits. A storage may be distributed over multiple distributed sub-storages. Part or all of the memory may be an electronic memory, magnetic memory, etc. For example, the storage may have volatile and a non-volatile part. Part of the storage may be read-only.

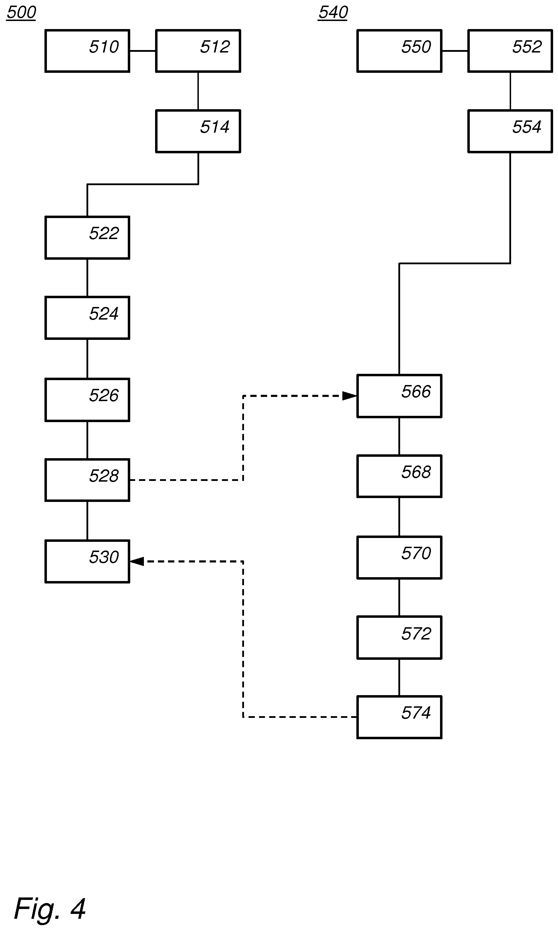

Fig. 4 schematically shows an example of an embodiment of a client method 500 for computing a two-party signature computation at a client device together with a server device. For example, the method may be executed on client device 100. Client method 500 comprises:

- storing (510), the storing comprises

  - storing 512 a client share (112, $u_c$) of a client private key ($d_c$) according to a first two-party signature algorithm, the client private key ($d_c$) being shared into at least the client share (112, $u_c$) and a server share (212, $v_c$) stored separate from the client share, and
  - storing 514 a client share (114, $v_s$) of a server private key ($d_s$) according to a second two-party signature algorithm, the server private key ($d_s$) being shared into at least the client share (114, $v_s$) and a server share (214, $u_s$) stored separate from the client share, and

- storing (522) a message ($M$) and or a message hash ($H(M)$)
- computing (524) a first partial signature ($X_c$) over the message ($M$) with the first two-party signature algorithm using the client share (112, $u_c$) of the client private key ($d_c$),
- computing (526) a second partial signature ($X_s$) over the message ($M$) with the second two-party signature algorithm using the client share (114, $v_s$) of the server private key ($d_s$),
- sending (528) the first partial signature ($X_c$) and the second partial signature ($X_s$) to the server device.

Fig. 4 also schematically shows an example of an embodiment of a server method 540 arranged for a two-party signature computation at a server device together with a client device. The server method may, e.g., be executed on server device 200. Communication between method 500 and 540 has been indicated with dashed lines. Server method 540 comprises:

- storing (550), the storing comprising

  - storing 552 a server share (212, $v_c$) of a client private key ($d_c$) according to a first two-party signature algorithm, the client private key ($d_c$) being shared into at least the server share (212, $v_c$) and a client share (112, $u_c$) stored separate from the server share, and
  - storing 554 a server share (214, $u_s$) of a server private key ($d_s$) according to a second two-party signature algorithm, the server private key ($d_s$) being shared into at least the server share (214, $u_s$) and a client share (114, $v_s$) stored separate from the server share, and

- receiving (566) a first partial signature ($X_c$) from the client device, the first partial signature ($X_c$) being computed over a message ($M$) with the first two-party signature algorithm using the client share (112, $u_c$) of the client private key ($d_c$), and receiving a second partial signature ($X_s$) from the client device, the second partial signature ($X_s$) being computed over the message ($M$) with the second two-party signature algorithm using the client share (114, $v_s$) of the server private key ($d_s$),
- computing (568) a first two-party signature ($S_c(M)$) obtained from the first partial signature ($X_c$) and the server share (212, $v_c$) of the client private key ($d_c$),
- compute (570) a second two-party signature ($S_s(M)$) obtained from the second partial signature ($X_s$) and the server share (214, $u_s$) of the server private key ($d_s$),
- combining (572) the first two-party signature ($S_c(M)$) and the second two-party signature ($S_s(M)$) into a final two-party signature ($S$).

Method 500 and 540 may comprise additional operations. For example, Fig. 4 shows sending 574 the final signature, and 530 receiving the final signature. These operations optional. There may be other optional steps included in the methods, e.g., verification steps, etc.

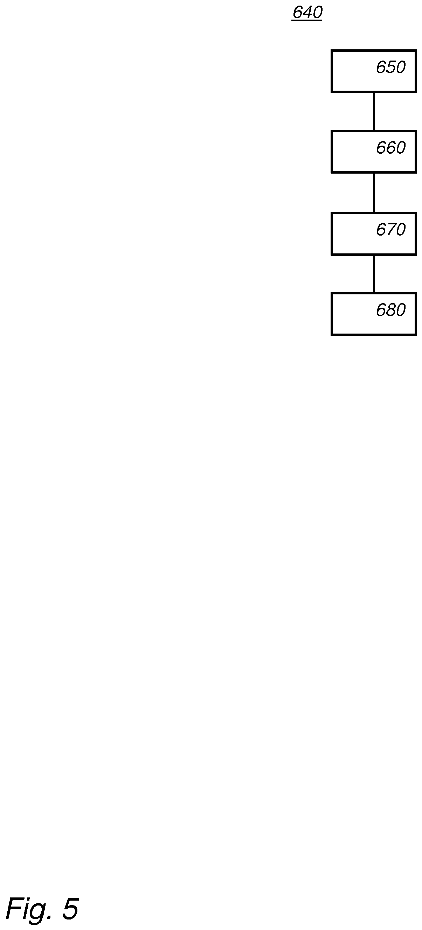

Fig. 5 schematically shows an example of an embodiment of a key generation method 640.

Key generation method 640 is arranged for generating a shared key with a second key generation device. The key generation method comprises

- generating 650 keys for a first two-party signature algorithm, said keys including a public key 313, having a corresponding first private key, a first share 312, of the first private key and a second share of the second private key,
- sending 660 the second share of the first private key and the public key to the second device
- receiving 670 a second share 314 of a second private key from the second device
- storing 680 the first share 312, of the first private key and the second share 314, of a second private key in a storage.

Many different ways of executing the methods are possible, as will be apparent to a person skilled in the art. For example, the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

In an embodiment, the signature by the server private key and the client private key are both computed with a two-party signature algorithm. This has the advantage of protecting a user device against attacks on its memory, e.g., memory scraping attacks. Furthermore, both client and server contribute entropy to the final key, so that a lack of entropy at one side does not jeopardize the signing.

A method according to the invention may be executed using software, which comprises instructions for causing a processor system to perform methods 500, 540, or 640. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. A method according to the invention may be executed using a bitstream arranged to configure programmable logic, e.g., a field-programmable gate array (FPGA), to perform the method.

It will be appreciated that the invention also extends to computer programs, particularly computer programs on or in a carrier, adapted for putting the invention into practice. The program may be in the form of source code, object code, a code intermediate source, and object code such as partially compiled form, or in any other form suitable for use in the implementation of the method according to the invention. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth.

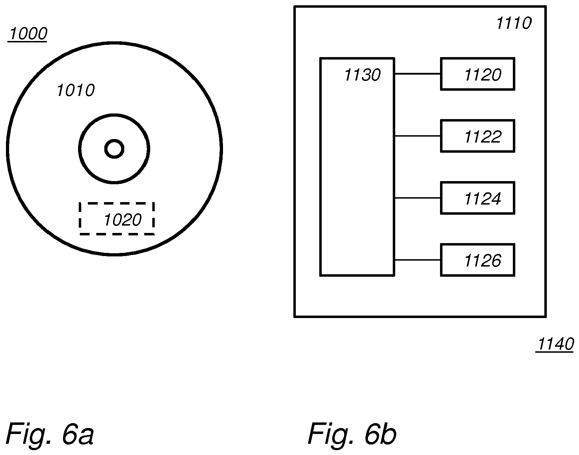

Fig. 6a shows a computer readable medium 1000 having a writable part 1010 comprising a computer program 1020, the computer program 1020 comprising instructions for causing a processor system to perform a client method, server method, and/or key generation method, according to an embodiment. The computer program 1020 may be embodied on the computer readable medium 1000 as physical marks or by means of magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform the client method, server method, and/or key generation method according to an embodiment.

Fig. 6b shows in a schematic representation of a processor system 1140 according to an embodiment. The processor system comprises one or more integrated circuits 1110. The architecture of the one or more integrated circuits 1110 is schematically shown in Fig. 6b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. The programming code configuring the processor system as an embodiment of a client device, server device, and/or key generation device.

Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, the client device, server device, and/or key generation device may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

It should be noted that the above-mentioned embodiments illustrate rather than limit the invention, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

**Claims**

1. A server device (200) arranged for a two-party signature computation with a client device, the server device comprising,

   - a key storage (210) arranged to store

     - a server share (212, $v_c$) of a client private key ($d_c$) according to a first two-party signature algorithm, the client private key ($d_c$) being shared into at least the server share (212, $v_c$) and a client share (112, $u_c$) stored at the client device, and
     - a server share (214, $u_s$) of a server private key ($d_s$) according to a second two-party signature algorithm, the server private key ($d_s$) being shared into at least the server share (214, $u_s$) and a client share (114, $v_s$) stored at the client device, and

   - a communication interface (230) arranged to communicate with the client device,
   - a processor circuit arranged to

     - receive a first partial signature ($X_c$) from the client device, the first partial signature ($X_c$) being computed over a message ($M$) with the first two-party signature algorithm using the client share (112, $u_c$) of the client private key ($d_c$),
     - receive a second partial signature ($X_s$) from the client device, the second partial signature ($X_s$) being computed over the message ($M$) with the second two-party signature algorithm using the client share (114, $v_s$) of the server private key ($d_s$),
     - compute a first two-party signature ($S_c(M)$) obtained from the first partial signature ($X_c$) and the server share (212, $v_c$) of the client private key ($d_c$),
     - compute a second two-party signature ($S_s(M)$) obtained from the second partial signature ($X_s$) and the server share (214, $u_s$) of the server private key ($d_s$),
     - combine the first two-party signature ($S_c(M)$) and the second two-party signature ($S_s(M)$) into a final two-party signature ($S$).

2. A client device (100) arranged for a two-party signature computation with a server device, the client device comprising,

   - a key storage (110) arranged to store

     - a client share (112, $u_c$) of a client private key ($d_c$) according to a first two-party signature algorithm, the client private key ($d_c$) being shared into at least the client share (112, $u_c$) and a server share (212, $v_c$) stored at the server device, and
     - a client share (114, $v_s$) of a server private key ($d_s$) according to a second two-party signature algorithm, the server private key ($d_s$) being shared into at least the client share (114, $v_s$) and a server share (214, $u_s$) stored at the server device, and

- a message storage (120) arranged to store a message ($M$) and or a message hash ($H(M)$)
- a communication interface (130) arranged to communicate with the server device,
- a processor circuit arranged to

    - compute a first partial signature ($X_c$) over the message ($M$) with the first two-party signature algorithm using the client share (112, $u_c$) of the client private key ($d_c$),
    - compute a second partial signature ($X_s$) over the message ($M$) with the second two-party signature algorithm using the client share (114, $v_s$) of the server private key ($d_s$),
    - send the first partial signature ($X_c$) and the second partial signature ($X_s$) to the server device.

3. A client device and/or a server device as in any one of the preceding claims, wherein

    - the processor circuit of the client device is configured to generate an authentication token (OTT) and send the authentication token to the server device, and/or
    - the processor circuit of the server device is configured to receive an authentication token from the client device, and to verify the authentication token, the final two-party signature ($S$) not being computed if the authentication token does not verify.

4. A client device and/or a server device as in any one of the preceding claims, wherein the first two-party signature algorithm and/or the second two-party signature algorithm comprises a padding operation.

5. A client device and/or a server device as in any one of the preceding claims, wherein the first two-party signature algorithm and the second two-party signature algorithm comprise the same padding operation.

6. A client device and/or a server device as in Claim 5, wherein the padding operation is EMSA-PSS-ENCODE according to RFC 8017.

7. A server device as in any one of the preceding claims, wherein combining the first and second two-party signatures comprises computing a linear combination of the first and second two-party signatures.

8. A server device as in Claim 7, wherein the first partial signature ($X_c$) and the first two-party signature are computed modulo a client modulus ($N_c$), and the second partial signature ($X_s$) and the second two-party signature are computed modulo a server modulus ($N_s$), the linear combination of the first and second two-party signatures comprising

    - multiply the first two-party signature ($S_c(M)$) with a multiple of the server modulus ($\beta N_s$) and multiply the second two-party signature ($S_s(M)$) with a multiple of the client modulus ($\alpha N_c$).

9. A client device and/or a server device as in any one of the preceding claims, wherein computing the first and second two-party signature and/or the first and second partial two-party signature comprises computing an exponent.

10. A client device and/or a server device as in any one of the preceding claims, wherein the client private key ($d_c$) and to the sever private key ($d_s$) correspond to the same public key (113, $e$).

11. A client device and/or a server device as in any one of the preceding claims, wherein

    - the processor circuit of the server device is configured to send the final two-party signature to the client device, and/or
    - the processor circuit of the client device is configured to receive the final two-party signature from the server device.

12. A client device and/or a server device as in any one of the preceding claims, wherein

    - the processor circuit of the server device is configured to verify at least the padding of the final two-party signature ($S$) and/or of the first and second two-party signatures, and/or
    - the processor circuit of the client device is configured to verify the final two-party signature ($S$).

**13.** A client method (500) arranged for a two-party signature computation with a server method, the client method comprising,

- storing (510), the storing comprises

- storing 512 a client share (112, $u_c$) of a client private key ($d_c$) according to a first two-party signature algorithm, the client private key ($d_c$) being shared into at least the client share (112, $u_c$) and a server share (212, $v_c$) stored separate from the client share, and
- storing 514 a client share (114, $v_s$) of a server private key ($d_s$) according to a second two-party signature algorithm, the server private key ($d_s$) being shared into at least the client share (114, $v_s$) and a server share (214, $u_s$) stored separate from the client share, and

- storing (522) a message ($M$) and or a message hash ($H(M)$)
- computing (524) a first partial signature ($X_c$) over the message ($M$) with the first two-party signature algorithm using the client share (112, $u_c$) of the client private key ($d_c$),
- computing (526) a second partial signature ($X_s$) over the message ($M$) with the second two-party signature algorithm using the client share (114, $v_s$) of the server private key ($d_s$),
- sending (528) the first partial signature ($X_c$) and the second partial signature ($X_s$) to the server device.

**14.** A server method (540) arranged for a two-party signature computation with a client device, the server device comprising,

- storing (550), the storing comprising

- storing 552 a server share (212, $v_c$) of a client private key ($d_c$) according to a first two-party signature algorithm, the client private key ($d_c$) being shared into at least the server share (212, $v_c$) and a client share (112, $u_c$) stored separate from the server share, and
- storing 554 a server share (214, $u_s$) of a server private key ($d_s$) according to a second two-party signature algorithm, the server private key ($d_s$) being shared into at least the server share (214, $u_s$) and a client share (114, $v_s$) stored separate from the server share, and

- receiving (566) a first partial signature ($X_c$) from the client device, the first partial signature ($X_c$) being computed over a message ($M$) with the first two-party signature algorithm using the client share (112, $u_c$) of the client private key ($d_c$), and receiving a second partial signature ($X_s$) from the client device, the second partial signature ($X_s$) being computed over the message ($M$) with the second two-party signature algorithm using the client share (114, $v_s$) of the server private key ($d_s$),
- computing (568) a first two-party signature ($S_c(M)$) obtained from the first partial signature ($X_c$) and the server share (212, $v_c$) of the client private key ($d_c$),
- compute (570) a second two-party signature ($S_s(M)$) obtained from the second partial signature ($X_s$) and the server share (214, $u_s$) of the server private key ($d_s$),
- combining (572) the first two-party signature ($S_c(M)$) and the second two-party signature ($S_s(M)$) into a final two-party signature ($S$).

**15.** A computer readable medium (1000) comprising transitory or non-transitory data (1020) representing instructions to cause a processor system to perform the method according to any one of claims 13-14.

*Fig. 1*

*Fig. 2*

*Fig. 3*

*Fig. 4*

640

```
┌──────────┐
│      650 │
└──────────┘
      │
┌──────────┐
│      660 │
└──────────┘
      │
┌──────────┐
│      670 │
└──────────┘
      │
┌──────────┐
│      680 │
└──────────┘
```

*Fig. 5*

*1000*

*1010*

*1020*

*1110*

*1130*

*1120*

*1122*

*1124*

*1126*

*1140*

*Fig. 6a*

*Fig. 6b*

Europäisches
Patentamt

European
Patent Office

Office européen
des brevets

# EUROPEAN SEARCH REPORT

Application Number

EP 17 20 6295

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | MIHIR BELLARE ET AL: "The Security of Practical Two-Party RSA Signature Schemes", INTERNATIONAL ASSOCIATION FOR CRYPTOLOGIC RESEARCH,, vol. 20020610:021238, 10 June 2002 (2002-06-10), pages 1-26, XP061000234, [retrieved on 2002-06-10] * sections 1 and 2, HCS scheme; figure 2 * | 1-15 | INV. H04L9/32 H04L9/08 |
| X | GANESAN R: "Yaksha: augmenting Kerberos with public key cryptography", NETWORK AND DISTRIBUTED SYSTEM SECURITY, 1995., PROCEEDINGS OF THE SYM POSIUM ON SAN DIEGO, CA, USA 16-17 FEB. 1, LOS ALAMITOS, CA, USA,IEEE COMPUT. SOC, 16 February 1995 (1995-02-16), pages 132-143, XP010134533, DOI: 10.1109/NDSS.1995.390639 ISBN: 978-0-8186-7027-5 * section 2.5 or 2.6 * | 1-15 | |
| A,D | MORIARTY K ET AL: "PKCS #1: RSA Cryptography Specifications Version 2.2; rfc8017.txt", PKCS #1: RSA CRYPTOGRAPHY SPECIFICATIONS VERSION 2.2; RFC8017.TXT, INTERNET ENGINEERING TASK FORCE, IETF; STANDARD, INTERNET SOCIETY (ISOC) 4, RUE DES FALAISES CH- 1205 GENEVA, SWITZERLAND, 14 November 2016 (2016-11-14), pages 1-78, XP015115647, [retrieved on 2016-11-14] * sections 8.1 and 9.1 * | 5,6,12 | TECHNICAL FIELDS SEARCHED (IPC)<br>H04L |

-/--

The present search report has been drawn up for all claims

| Place of search | Date of completion of the search | Examiner |
|---|---|---|
| Munich | 29 May 2018 | Manet, Pascal |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 1 of 2

| | Europäisches Patentamt<br>European Patent Office<br>Office européen des brevets | **EUROPEAN SEARCH REPORT** | Application Number<br>EP 17 20 6295 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | "Chapter 11: Digital Signatures ED - Menezes A J; Van Oorschot P C; Vanstone S A",<br>HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 425 - 488<br>,<br>1 October 1996 (1996-10-01), XP001525011,<br>ISBN: 978-0-8493-8523-0<br>Retrieved from the Internet:<br>URL:http://www.cacr.math.uwaterloo.ca/hac/<br>* section 11.3.3(v) and (vii) *<br>----- | | |
| T | "Chapter 8: Public-Key Encryption ED - Menezes A J; Van Oorschot P C; Vanstone S A",<br>HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 283 - 319<br>,<br>1 October 1996 (1996-10-01), XP001525008,<br>ISBN: 978-0-8493-8523-0<br>Retrieved from the Internet:<br>URL:http://www.cacr.math.uwaterloo.ca/hac/<br>* section 8.2.2(ii) *<br>----- | | TECHNICAL FIELDS SEARCHED (IPC) |

The present search report has been drawn up for all claims

| Place of search | Date of completion of the search | Examiner |
|---|---|---|
| Munich | 29 May 2018 | Manet, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

**Non-patent literature cited in the description**

- **MIHIR BELLARE ; RAVI SANDHU.** The Security of Practical Two-Party RSA Signature Schemes. *Cryptology ePrint Archive, Report 2001/060,* 2001, http://eprint.iacr.org/2001/060
- Two-Party Generation of DSA Signatures(Extended Abstract). **PHILIP MACKENZIE ; MICHAEL K. REITER.** Bell Labs. Lucent Technologies
- **C. HAZAY ; G. L. MIKKELSEN ; T. RABIN ; T. TOFT.** Efficient RSA Key Generation and Threshold Paillier in the Two-Party Setting. *Cryptology ePrint Archive, Report 2011/494,* 2011
- Two party RSA key generation. **N. GILBOA.** Annual International Cryptology Conference. Springer, 1999
- Efficient RSA Key Generation Protocol in a Two-Party Setting and its Application into the Secure Multiparty Computation Environment. **ANGELO AGATINO NICOLOSI.** Diss. Aarhus University, Department of Computer Science, 2011